(19) **Europäisches Patentamt / European Patent Office / Office européen des brevets**

(11) **EP 3 382 875 B1**

(12) **FASCICULE DE BREVET EUROPEEN**

(45) Date de publication et mention de la délivrance du brevet:
**21.07.2021 Bulletin 2021/29**

(51) Int Cl.:
***H02M 3/44*** *(2006.01)*

(21) Numéro de dépôt: **18164051.7**

(22) Date de dépôt: **26.03.2018**

(54) **CONVERTISSEUR CONTINU-CONTINU**

GLEICHSTROM-GLEICHSTROM-WANDLER

DC-DC CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2017 FR 1752636**

(43) Date de publication de la demande:
**03.10.2018 Bulletin 2018/40**

(73) Titulaire: **Commissariat à l'Energie Atomique et aux Energies Alternatives
75015 Paris (FR)**

(72) Inventeurs:
• **DESPESSE, Ghislain
38340 VOREPPE (FR)**
• **POLLET, Benjamin
38100 GRENOBLE (FR)**

(74) Mandataire: **Cabinet Beaumont
4, Place Robert Schuman
B.P. 1529
38025 Grenoble Cedex 1 (FR)**

(56) Documents cités:
**US-A- 6 058 027 US-B1- 6 317 342**

• **TANG W C ET AL: "LATERALLY DRIVEN POLYSILICON RESONANT MICROSTRUCTURES", SENSORS AND ACTUATORS, ELSEVIER SEQUOIA S.A. LAUSANNE, CH, vol. 20, no. 1 / 02, 15 novembre 1989 (1989-11-15), pages 25-32, XP000135244, DOI: 10.1016/0250-6874(89)87098-2**
• **J. MARK NOWOROLSKI ET AL: "Microresonant devices for power conversion", PROCEEDINGS OPTICAL DIAGNOSTICS OF LIVING CELLS II, vol. 3514, 8 septembre 1998 (1998-09-08), pages 260-265, XP055434075, US ISSN: 0277-786X, DOI: 10.1117/12.323897 ISBN: 978-1-5106-1324-9**

## Description

Domaine

La présente description concerne de façon générale les systèmes électroniques de conversion d'énergie et plus particulièrement, la réalisation d'un convertisseur continu-continu (dc/dc). La présente description concerne plus précisément un convertisseur dc/dc à matériau piézoélectrique.

Exposé de l'art antérieur

Les convertisseurs de puissance continu-continu des systèmes électroniques peuvent être basés sur différents principes.

Une première catégorie concerne les convertisseurs basés sur l'utilisation de transformateurs. La plupart des transformateurs sont basés sur des enroulements inductifs, mais on trouve également des transformateurs piézoélectriques. Ces derniers transforment une tension alternative en une autre tension alternative avec une amplitude différente et requièrent, comme pour les transformateurs magnétiques, de convertir la tension continue d'entrée en tension alternative puis de redresser la tension alternative fournie par le transformateur.

Une deuxième catégorie concerne les alimentations à découpage qui utilisent un élément inductif de stockage d'énergie et qui découpent une tension continue d'entrée, généralement en

modulation de largeur d'impulsions, pour réguler la valeur d'une tension continue de sortie.

Plus récemment, on a vu apparaitre des convertisseurs exploitant la résonance d'un matériau piézoélectrique. En particulier, le document KR 20100137913 décrit un exemple de convertisseur à transducteur piézoélectrique dans lequel la tension de sortie est régulée en ajustant la fréquence de phases à tension constante et de phases à charge constante, à la manière d'un circuit à capacités commutées.

Le document US-B-6,317,342 décrit un système de conversion d'énergie à base d'un microsystème électromécanique.

Le document "Laterally Driven Polysilicon Resonant Microstructures" de W. Tang et al. publié dans Sensor and actuator le 15 novembre 1989 décrit une microstructure résonnante.

Le document "Microresonant Device for Power Conversion" de J. Mark Noworolski et al. publié dans les procédures SPIE 3514, Micromachined devices and components IV le 8 septembre 1998 décrit des dispositifs microrésonants pour conversion d'énergie.

Le document US6,058,027 décrit des éléments de circuit commandés par un convertisseur continu-continu à base de micromachine sur un substrat commun.

Résumé

La présente invention pallie tout ou partie des inconvénients des convertisseurs continu-continu.

La présente invention propose une solution tirant profit des avantages des matériaux piézoélectriques.

La présente invention propose une solution permettant de réguler la tension de sortie du convertisseur en fonction des besoins de la charge.

Selon un aspect, un mode de réalisation propose un convertisseur élévateur de tension.

Selon un autre aspect, un mode de réalisation propose un convertisseur abaisseur de tension.

Un mode de réalisation propose également une solution compatible avec la réalisation d'un convertisseur élévateur-abaisseur.

La présente invention prévoit un convertisseur continu-continu, comportant un élément piézoélectrique ; un premier interrupteur, reliant une première électrode de l'élément piézoélectrique à une première borne d'application d'une première tension ; un deuxième interrupteur, reliant ladite première électrode de l'élément piézoélectrique à une première borne de fourniture d'une deuxième tension ; et au moins un troisième interrupteur connectant la première électrode à une deuxième électrode de l'élément piézoélectrique, lesdits interrupteurs étant commandés de façon cyclique, à fréquence approximativement constante avec, entre chaque fermeture d'un des interrupteurs, une phase dans laquelle tous les interrupteurs sont ouverts.

Selon un mode de réalisation, la fermeture de chaque interrupteur s'effectue sous une tension approximativement nulle à ses bornes.

Selon un mode de réalisation, la deuxième électrode de l'élément piézoélectrique est connectée à une deuxième borne d'application de la première tension et à une deuxième borne de fourniture de la deuxième tension.

Selon un mode de réalisation, un quatrième interrupteur relie la deuxième électrode de l'élément piézoélectrique à une deuxième borne d'application de la première tension et à une deuxième borne de fourniture de la deuxième tension.

Selon la présente invention, en régime établi, un cycle de commande comporte les phases successives suivantes :

(I) ouverture de tous les interrupteurs ;
(II) fermeture du premier interrupteur ;
(III) ouverture de tous les interrupteurs ;
(IV) fermeture du troisième interrupteur ;
(V) ouverture de tous les interrupteurs ; et
(VI) fermeture du deuxième interrupteur.

Selon un mode de réalisation, la phase de fermeture du troisième interrupteur débute approximativement à un instant de déformation maximale de l'élément piézoélectrique.

Selon un mode de réalisation, la phase de fermeture du deuxième interrupteur se termine approximativement à un instant de déformation maximale de l'élément piézoélectrique.

Selon un mode de réalisation, la régulation de la deuxième tension s'effectue en réglant l'instant auquel se termine la phase de fermeture du troisième interrupteur.

Selon un mode de réalisation, le deuxième interrupteur est une diode.

Selon un mode de réalisation, la phase de fermeture du troisième interrupteur se termine approximativement à un instant de déformation maximale de l'élément piézoélectrique.

Selon un mode de réalisation, la phase de fermeture du premier interrupteur débute approximativement à un instant de déformation maximale de l'élément piézoélectrique.

Selon un mode de réalisation, la régulation de la deuxième tension s'effectue en réglant l'instant auquel se termine la phase de fermeture du premier interrupteur.

Selon un mode de réalisation, le troisième interrupteur est une diode.

La présente invention prévoit un procédé de commande d'un convertisseur continu-continu, comportant au moins un élément piézoélectrique comportant, en régime permanent, les phases cycliques suivantes :

connecter une première électrode de l'élément piézoélectrique à une première borne d'application d'une première tension continue ;
déconnecter l'élément piézoélectrique en le plaçant en circuit ouvert ;
court-circuiter l'élément piézoélectrique ;
déconnecter l'élément piézoélectrique en le plaçant en circuit ouvert ;
connecter ladite première borne de l'élément piézoélectrique à une première borne de fourniture d'une deuxième tension continue ;
déconnecter l'élément piézoélectrique en le plaçant en circuit ouvert.
Selon un mode de réalisation, les instants de connexion s'effectuent alors sous tension approximativement nulle d'un interrupteur de connexion correspondant.

## Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une représentation schématique et sous forme de blocs d'un système utilisant un convertisseur dc/dc du type auquel s'appliquent les modes de réalisation décrits ;
la figure 2 représente, de façon très schématique, un mode de réalisation d'un convertisseur dc-dc utilisant un élément piézoélectrique ;
les figures 3A et 3B illustrent, par des chronogrammes schématiques, le fonctionnement du convertisseur de la figure 2 en élévateur de tension ;
la figure 4 représente un exemple de schéma électrique d'un convertisseur élévateur reprenant le principe de la figure 2 ;
les figures 5A et 5B illustrent, par des chronogrammes schématiques, le fonctionnement du convertisseur de la figure 2 en abaisseur de tension ;
la figure 6 représente un exemple de schéma électrique du convertisseur abaisseur reprenant le principe de la figure 2 ;
la figure 7 représente, de façon très schématique, un autre mode de réalisation d'un convertisseur dc-dc élévateur de tension ; et
les figures 8A et 8B illustrent, par des chronogrammes schématiques, le fonctionnement du convertisseur de la figure 7.

## Description détaillée

Par souci de clarté, seuls les éléments qui sont utiles à la compréhension des modes de réalisation décrits ont été représentés et seront détaillés. En particulier, la constitution et réalisation des circuits en amont et en aval du convertisseur décrit n'a pas été détaillée, les modes de réalisation décrits étant compatibles avec les applications usuelles de tels convertisseurs. Il est à noter que, sur les figures, les éléments structurels et/ou fonctionnels communs aux différents modes de réalisation peuvent présenter les mêmes références et peuvent disposer de propriétés structurelles, dimensionnelles et matérielles identiques. Sauf précision contraire, les expressions "approximativement", "sensiblement" et "de l'ordre de" signifient à 10 % près, de préférence à 5 % près, ou à 10° près, de préférence à 5° près.

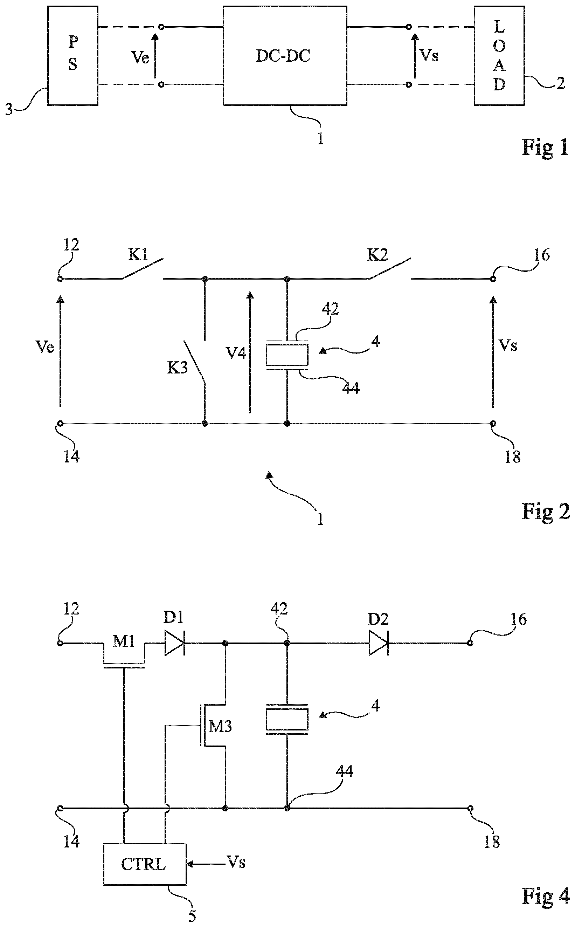

La figure 1 est une représentation schématique et sous forme de blocs d'un système utilisant un convertisseur dc/dc du type auquel s'appliquent les modes de réalisation décrits.

Un convertisseur continu-continu 1 (DC-DC) a pour rôle de réguler une tension d'alimentation Vs d'une charge 2 (LOAD) à une valeur stable, en étant alimenté par une source d'énergie 3 (PS) fournissant une tension continue (par exemple, une batterie, un panneau solaire, etc.). Le convertisseur 1 peut, selon les applications, élever ou abaisser la tension continue Ve fournie par la source d'énergie 3.

Dans un convertisseur 1 de type alimentation à découpage basée sur un élément inductif de stockage d'énergie, la commande du convertisseur est généralement effectuée en modulation de largeur d'impulsions afin de contrôler les périodes d'accumulation d'énergie dans l'élément inductif et de restitution de cette énergie à la charge. Une telle commande n'est cependant pas transposable à un convertisseur basé sur un élément en matériau piézoélectrique.

Il serait néanmoins souhaitable de tirer profit des principes de découpage de la tension d'entrée et d'accumulation d'énergie et de les utiliser dans un matériau piézoélectrique afin de tirer profit des avantages des matériaux piézoélectriques, notamment en termes de faibles pertes et de faible encombrement.

La solution décrite par le document KR 20100137913 n'est également pas transposable dans la mesure où cette solution prévoit de réguler la tension de sortie en ajustant la fréquence de commutation, ce qui conduit à s'éloigner de la fréquence de résonance du matériau piézoélectrique, et une diminution du facteur de qualité et du rendement. Or, un matériau piézoélectrique est précisément préféré à une inductance afin de tirer profit d'un meilleur facteur de qualité. Par conséquent, cette solution est en pratique limitée à des applications dans lesquelles la puissance de la charge varie peu et à un facteur deux entre la tension d'entrée et la tension de sortie, sauf à multiplier le nombre de transducteurs piézoélectriques, ce qui nuit alors au faible encombrement qui, là encore, est l'un des avantages d'un matériau piézoélectrique par rapport à un matériau magnétique.

Les modes de réalisation décrits tirent leur origine d'une analyse du fonctionnement d'un matériau piézoélectrique à la résonance pour exploiter des phases de transfert de charges permettant non seulement de s'affranchir de l'utilisation d'un élément inductif, mais également de réguler la tension de sortie en conservant la résonance du matériau piézoélectrique, c'est-à-dire avec des cycles de commutation à fréquence constante, dont on ajuste les durées des phases de commutation respectives à l'intérieur du cycle.

Plus particulièrement, l'oscillation mécanique d'un élément piézoélectrique est approximativement sinusoïdale. Une augmentation ou une diminution de l'énergie sur une période conduit respectivement à une augmentation ou à une diminution de l'amplitude d'oscillation. Par ailleurs, en circuit ouvert (à charge constante), une augmentation de l'amplitude des oscillations engendre une augmentation de la tension aux bornes de l'élément piézoélectrique, alors que, à tension constante, cette augmentation d'amplitude d'oscillation conduit à une augmentation du courant.

La figure 2 représente, de façon très schématique, un mode de réalisation d'un convertisseur dc-dc 1 utilisant un élément piézoélectrique.

Selon ce mode de réalisation, une première électrode 42 d'un élément piézoélectrique 4 est connectée, par un interrupteur K1, à une première borne 12 d'application de la tension continue d'entrée Ve et une deuxième électrode 44 de cet élément piézoélectrique 4 est connectée à une deuxième borne 14 d'application de la tension Ve. Le rôle de l'interrupteur K1 est de contrôler les phases où de l'énergie est transférée de la source d'énergie (tension Ve) vers l'élément piézoélectrique 4.

La première électrode 42 de l'élément piézoélectrique 4 est également connectée, par un interrupteur K2 à une première borne 16 de fourniture de la tension Vs. Dans l'exemple de la figure 2, la deuxième électrode 44 de l'élément piézoélectrique 4 est connectée à une deuxième borne 18 de fourniture de la tension Vs, les bornes 14 et 18 étant donc confondues et définissant la référence des tensions Ve et Vs. Le rôle de l'interrupteur K2 est de contrôler les phases où de l'énergie est transférée de l'élément piézoélectrique à la charge (non représentée en figure 2).

Une difficulté qui réside dans l'utilisation d'un matériau piézoélectrique à la résonance est liée au fait qu'il faut, au cours d'un cycle d'oscillation mécanique du matériau piézoélectrique, à la fois injecter et retirer la même quantité d'énergie, sauf à assister à une saturation de l'amplitude des oscillations (trop d'énergie apportée) ou à un amortissement de ces oscillations (trop d'énergie consommée). Dans le premier cas, on détériore le facteur de qualité et le rendement. Dans le second cas, le système fini par ne plus fonctionner. Or, les tensions d'entrée et de sortie sont différentes.

Pour satisfaire cette contrainte, un interrupteur K3 est connecté en parallèle sur l'élément piézoélectrique 4 (entre les bornes 42 et 44). Le rôle de l'interrupteur K3 est d'autoriser un transfert de charges sous une tension fixe (nulle dans l'exemple de la figure 2) différente des tensions Ve et Vs.

Par ailleurs, on prévoit une commande particulière des différents interrupteurs afin de respecter, en régime établi, que sur un cycle de déformation du matériau piézoélectrique, c'est-à-dire sur une période d'oscillation et vu de l'élément piézoélectrique, la somme des charges échangées avec l'extérieur est nulle et la somme des énergies échangées avec l'extérieur est nulle (aux pertes près). De préférence, on prévoit une fermeture des interrupteurs K1, K2 et K3 quand la tension à leurs bornes respectives est sensiblement nulle afin de limiter les pertes.

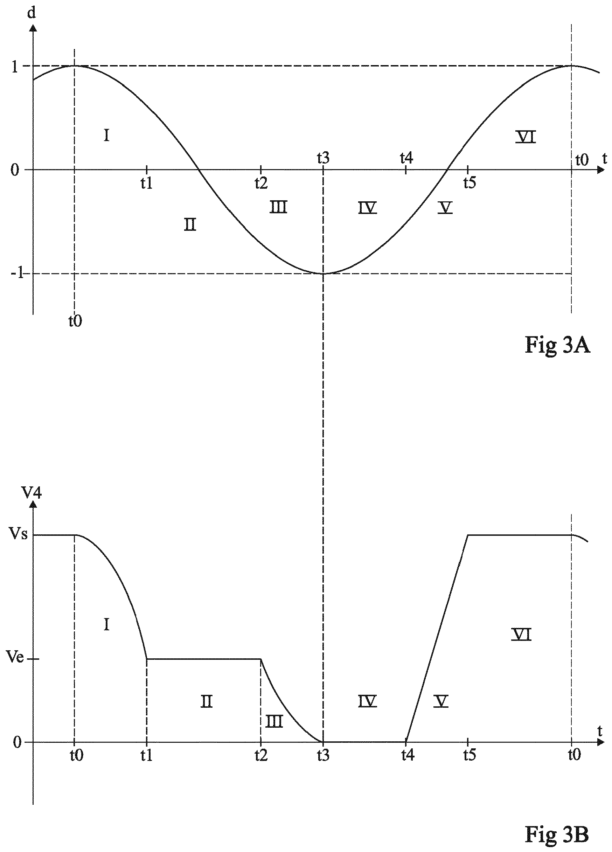

Les figures 3A et 3B illustrent, par des chronogrammes schématiques, le fonctionnement du convertisseur de la figure 2 en élévateur de tension.

Ces figures illustrent le fonctionnement en régime établi, c'est-à-dire à partir du moment où l'on a atteint la résonance du matériau piézoélectrique avec une amplitude sensiblement constante, c'est-à-dire avec des échanges d'énergie et de charges sensiblement équilibrés sur chaque période. Il y a donc une identité de la fréquence des cycles de commande avec la fréquence de résonance de l'élément piézoélectrique. Ainsi, le convertisseur fonctionne à la fréquence de résonance de l'élément piezoélectrique. Pour simplifier la description, on néglige les pertes dans les interrupteurs à l'état passant ainsi que les pertes dans le matériau piézoélectrique à la résonance.

La figure 3A illustre la déformation mécanique de l'élément piézoélectrique 4 au cours d'un cycle (une période) de résonance. L'échelle de déformation est normalisée.

La figure 3B illustre un exemple correspondant d'allure de la tension V4 aux bornes de l'élément piézoélectrique 4.

En régime permanent, on alterne des phases pendant lesquelles tous les interrupteurs sont ouverts et des phases pendant lesquelles un des interrupteurs est fermé. Au cours d'un cycle, chaque interrupteur K1, K2, K3 est fermé pendant une phase.

Lorsque (instant t0) l'élément 4 est à son amplitude de déformation maximale (1) dans une direction, ce qui revient à un instant où son courant est nul, on ouvre tous les interrupteurs. Sa déformation diminue et avec celle-ci la tension V4 à ses bornes. On est dans une phase (I) où l'on fonctionne à charge constante dans l'élément piézoélectrique 4.

Quand (instant t1) la tension V4 atteint la valeur Ve de la tension d'entrée, l'interrupteur K1 est fermé et les deux autres interrupteurs restent ouverts. On assiste alors (phase II) à un transfert d'énergie de la source d'énergie vers l'élément 4. La tension V4 aux bornes de l'élément 4 est égale à la tension d'entrée Ve.

Ce transfert d'énergie se poursuit jusqu'à un instant t2 où l'interrupteur K1 est de nouveau ouvert. On est alors dans une phase III où tous les interrupteurs sont ouverts et à charge constante. Cette phase se poursuit jusqu'à un instant t3 où l'élément 4 atteint sa déformation maximale (-1) dans l'autre direction.

A cet instant t3, où la tension V4 est égale ou proche de 0 et, idéalement, correspond à sa valeur minimale (passage de la dérivée de la tension par zéro), on ferme l'interrupteur K3 et on assiste à un transfert de charges entre les électrodes de l'élément piézoélectrique. Le courant dans l'élément 4 est également nul à l'instant t3 dans la mesure où tous les interrupteurs sont ouverts. Cette phase IV particulière, qui dans l'exemple des figures 2, 3A et 3B s'effectue sous tension nulle, permet de préserver à la fois l'équilibre des charges et des énergies du point de vue de l'élément piézoélectrique au cours d'un cycle.

A un instant t4, on provoque l'ouverture de l'interrupteur K3. On est de nouveau dans une phase V où tous les interrupteurs sont ouverts. L'oscillation de l'élément 4 se poursuit à vide jusqu'à un instant t5 où la tension à ses bornes atteint la valeur de la tension de sortie Vs.

A cet instant t5, l'interrupteur K2 est fermé et l'énergie est transférée à la charge connectée à la borne 16.

Ce transfert se poursuit jusqu'à ce que le courant dans le matériau piézoélectrique s'annule (instant t0) et l'on retrouve la phase I où tous les interrupteurs sont ouverts.

Dans la réalisation de la figure 2, l'interrupteur K2 peut être une diode dont l'anode est côté électrode 42 et la cathode côté borne 16. En effet, les instants t5 et t0 respectivement de fermeture et d'ouverture de l'interrupteur K2 correspondent à des instants où la tension anode-cathode devient positive (à la tension de jonction près) et où le courant dans la diode s'annule. Le reste du temps, la diode reste polarisée en inverse et l'interrupteur K2 est donc ouvert. L'interrupteur K2 peut également être formé d'un transistor MOSFET qui présente une diode en inverse. Cette diode en inverse peut assurer la fermeture à l'instant t5 et l'ouverture à l'instant t0, mais on peut forcer la fermeture du transistor MOS entre ces deux instants de façon à réduire la chute de tension aux bornes de l'interrupteur K2, donc les pertes.

Les interrupteurs K1 et K3 sont des interrupteurs commandés, par exemple des transistors MOS.

La détection de l'instant t1 s'effectue, par exemple, par une mesure de la tension V4 de façon à fermer l'interrupteur K1 quand cette tension atteint la valeur Ve. Selon un autre mode de réalisation, où la puissance ou le courant prélevé par la charge est mesuré ou connu, l'instant t1 est déterminé par temporisation (par exemple à partir de l'ouverture de l'interrupteur K2 et des durées de temporisation pré-calculées en fonction du courant de sortie).

La détermination de l'instant t2 s'effectue par exemple par temporisation dans un fonctionnement où la puissance/le courant de sortie est mesuré ou connu. Selon un autre exemple de réalisation, on détermine cet instant par rapport au cycle précédent en l'avançant ou en le retardant selon qu'au cycle précédent la tension V4 était nulle ou non au moment de la fermeture de l'interrupteur K3. On pourra par exemple utiliser une régulation de type proportionnelle-intégrale.

La détermination de l'instant t3 peut être effectuée par temporisation (par exemple en utilisant un compteur temporel ou timer). En effet, l'instant t3 correspond à la demi-période à partir de l'instant t0. On peut également détecter l'inversion de positif à négatif de la dérivée de la tension V4, ou encore utiliser un capteur d'extrema de déformation du matériau piézoélectrique.

L'instant t4, donc la durée de la phase IV, conditionne la quantité de charges qui sera retirée du piézoélectrique à tension nulle, c'est-à-dire sans retrait d'énergie du piézoélectrique. Plus cette phase IV est longue, moins on retire d'énergie du piézoélectrique et plus on favorise un cycle avec un bilan d'énergie positif. Plus le bilan d'énergie est positif, plus l'amplitude de déformation du piézoélectrique augmente d'un cycle à l'autre et plus la puissance/le courant de sortie finira par être élevé. En effet, durant la phase VI, plus le courant est élevé, plus la quantité de charges transmises à la sortie est élevée, d'autant plus que la durée de la phase VI augmente en même temps que l'on augmente la durée de la phase IV (l'augmentation de l'amplitude de la déformation accélère la variation de tension durant la phase V et raccourcit donc la durée de la phase V, ce qui au final laisse plus de durée disponible à la fois pour la phase IV et pour la phase VI). La détermination de l'instant t4 s'effectue de préférence en mesurant la tension de sortie Vs et en la comparant à une valeur de référence/de consigne. On pourra également effectuer le même type d'asservissement de l'instant t4 en régulant la puissance de sortie ou le courant de sortie.

Les instants t5 et t6 sont de préférence automatiques dans le cas de l'utilisation d'une diode en guise d'interrupteur K2. En variante, pour l'instant t5, on peut mesurer la tension aux bornes de l'élément 4 pour détecter quand elle atteint la valeur Vs, ou utiliser un compteur temporel. Pour l'instant t6, on peut détecter une inversion du sens du courant, un extremum de déformation du matériau piézoélectrique, un compteur temporel, etc.

On a fait référence ci-dessus à une tension V4 nulle à l'instant t3. Toutefois, en variante, la commutation de l'instant t3 ne s'effectue pas sous une tension nulle mais par exemple sous une tension négative (ou positive). Ainsi, tout ce qui a été décrit en relation avec l'instant t3 et la phase IV fonctionne de façon similaire si la tension V4 n'est pas nulle entre les instants t3 et t4 mais vaut une valeur Vb non nulle. Dans ce cas, l'électrode 44 n'est pas confondue avec les bornes 14 et 18 sauf à utiliser une source de tension supplémentaire elle-même référencée à l'électrode 44, par exemple une source symétrique +/- Ve avec un point milieu connecté à l'électrode 44.

Le fonctionnement décrit en relation avec les figures 2 et 3A, 3B permet que, sur un cycle, en régime établi, on a un équilibre des charges entre les charges entrantes et sortantes dans l'élément piézoélectrique 4 ainsi qu'un équilibre énergétique entre les énergies entrantes et sortantes. En d'autres termes, en désignant par Qe la quantité de charges transférée de la source d'énergie (batterie) dans l'élément 4 pendant la phase II, par Qs la quantité de charges transférée de l'élément 4 vers la charge 2 pendant la phase VI, et par Qb la quantité de charges dans l'élément 4 pendant la phase IV, on peut écrire :

$$Qe + Qb + Qs = 0,$$

en prenant pour convention qu'une valeur positive de Qe, Qb ou Qs induit des charges dans le même sens dans l'élément 4.

Par ailleurs, on peut également écrire :

$$Qe*Ve + Qb*Vb + Qs*Vs = 0.$$

Pour amorcer le système (régime transitoire), on ne ferme que les interrupteurs K1 et K3, c'est-à-dire que l'on n'effectue que les phases II, III, IV et V, jusqu'à, par exemple, ce que la tension V4 atteigne la valeur de sortie Vs souhaitée. En variante, on passe aux six phases de fonctionnement dès que la tension V4 est supérieure à la tension Ve. En pratique, si l'interrupteur K2 est une diode, à la fermeture de l'interrupteur K1, la tension Vs prendra directement la valeur de la tension Ve et ensuite on sera très rapidement en mode élévateur avec les six phases. Toutefois, via l'asservissement, on aura une phase IV un peu plus longue que normale de sorte à obtenir un bilan énergétique positif sur chaque cycle pour faire monter l'amplitude de la déformation du piézoélectrique pour permettre progressivement une augmentation de la tension Vs à sa valeur de consigne. Une fois la consigne atteinte et si le courant de sortie est stable, on atteint le régime permanent avec un bilan énergétique vu par le piézoélectrique nul sur une période. A partir de cet instant, on est en régime permanent et on retrouve les six phases de la figure 3B. La fin du régime transitoire a lieu lorsque la tension de sortie Vs atteint sensiblement la valeur souhaitée. La sortie du mode transitoire peut être automatique si l'interrupteur K2 est une diode.

Le fait de prévoir un fonctionnement à fréquence sensible constante permet de préserver un fonctionnement de l'élément piézoélectrique à la résonance. Cela permet de ne pas dégrader son facteur de qualité et ainsi d'optimiser le rendement.

Un autre avantage des modes de réalisation décrits ci-dessus est qu'ils ne sont pas limités à un facteur particulier entre la valeur de la tension d'entrée et celle de la tension de sortie.

Pour un matériau piézoélectrique donné, on connait sa fréquence de résonance. Selon sa forme, on connait également l'amplitude maximale de ses oscillations avant saturation. A cette amplitude maximale correspond un courant maximal de court-circuit, ce qui donne sensiblement le courant maximal qui pourra être fourni à la sortie durant la phase VI. De même, à cette amplitude maximale, correspond une tension à vide maximale qui donne sensiblement les tensions maximales que les tensions d'entrées ou de sortie pourront atteindre.

La figure 4 représente un exemple de schéma électrique d'un convertisseur élévateur reprenant le principe de la figure 2.

Selon cet exemple, l'interrupteur K2 est constitué d'une simple diode D2. L'interrupteur K3 est constitué d'un transistor MOS M3 (bidirectionnel en courant). L'interrupteur K1 est constitué d'un transistor MOS M1 en série avec une diode D1 (anode côté borne 12) pour le rendre unidirectionnel en courant et bidirectionnel en tension. Les transistors (interrupteurs) sont commandés à partir d'un circuit 5 (CTRL) mettant en oeuvre les fonctions décrites ci-dessus et recevant, par exemple une information représentative de la tension Vs.

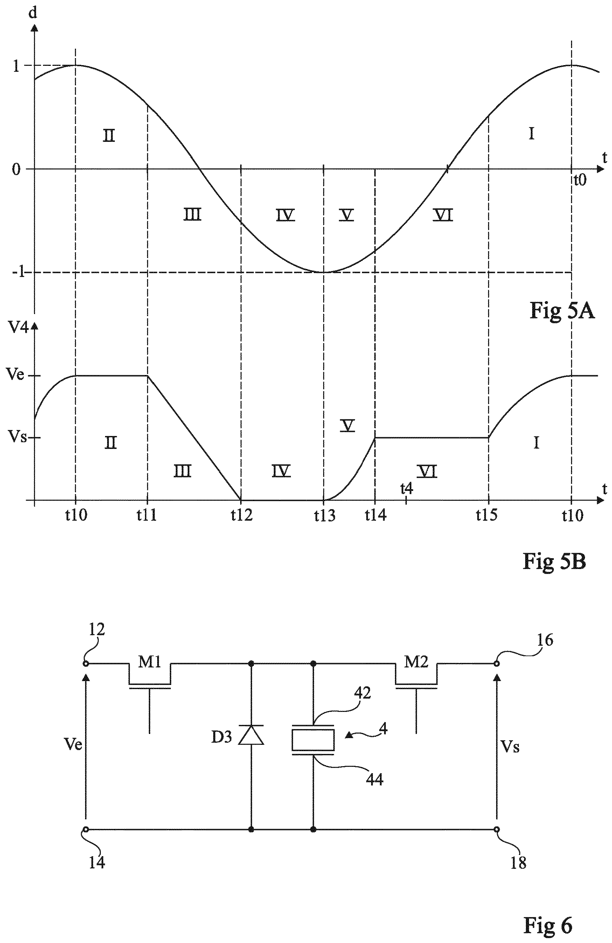

Les figures 5A et 5B illustrent le fonctionnement du circuit de la figure 2 en abaisseur de tension.

Comme pour les figures 3A et 3B, ces figures illustrent le fonctionnement en régime établi, c'est-à-dire à partir du moment où l'on a atteint une amplitude de déformation du piézoélectrique satisfaisant les besoins en puissance/courant de la sortie. La fréquence des cycles de commande est calée sur la fréquence de résonance de l'élément piézoélectrique. Ici encore, pour simplifier la description, on néglige les pertes dans les interrupteurs à l'état passant ainsi que les pertes dans le matériau piézoélectrique à la résonance.

La figure 5A illustre la déformation mécanique de l'élément piézoélectrique 4 au cours d'un cycle (une période) de résonance. L'échelle de déformation est normalisée.

La figure 5B illustre un exemple correspondant d'allure de la tension V4 aux bornes de l'élément piézoélectrique 4.

Pour simplifier, on utilise les mêmes désignations des phases I, II, III, IV, V et VI selon les phases de fermeture des interrupteurs K1, K2 et K3. Toutefois, les positions temporelles de ces phases dans le cycle de résonance par rapport aux minima et maxima de déformation sont différentes.

Ainsi, à un instant t10 correspondant au maximum (1) de déformation du matériau piézoélectrique dans une direction, on ferme l'interrupteur K1 (les interrupteurs K2 et K3 étant ouverts) et la tension V4 est alors égale à la tension Ve pendant une phase notée II.

A un instant t11, où suffisamment d'énergie a été accumulée dans l'élément 4, on ouvre l'interrupteur K1 et on laisse tous les interrupteurs ouverts pendant une phase III où la charge reste constante et la tension aux bornes de l'élément 4 diminue.

A un instant t12, où la tension aux bornes de l'élément 4 s'annule, l'interrupteur K3 se ferme et court-circuite l'élément 4. Cette phase IV subsiste jusqu'à un instant t13 où la déformation de l'élément 4 est maximale (-1) dans l'autre direction par rapport à l'instant t10.

A partir de l'instant t13, tous les interrupteurs sont ouverts. La tension aux bornes de l'élément 4 remonte sous l'effet de sa déformation mécanique.

Quand (instant t14) la tension V4 atteint la valeur souhaitée pour la tension Vs, on ferme l'interrupteur K2 et l'énergie est transférée à la charge 2 (phase VI).

Cette phase VI dure jusqu'à un instant t15 où l'on ouvre l'interrupteur K2. La tension V4 se remet alors à croitre (phase I) jusqu'à la fin du cycle (instant t10) où elle atteint la valeur de la tension Ve.

La régulation s'effectue ici en réglant la durée de la phase II (l'instant t11).

Comme pour un élévateur de tension, on a, au niveau de l'élément piézoélectrique 4, trois phases (I, III, IV) à charge constante et trois phases (II, IV, VI) à tension constante. De même, on prévoit des instants de fermeture des interrupteurs lorsque la tension à leurs bornes est nulle (aux tensions de jonction près).

La détection des différents instants de commutation peut utiliser les mêmes techniques que celles décrites ci-dessus pour un convertisseur élévateur, par exemple compteur temporel, mesure de tension de sortie, de tension aux bornes de l'élément 4, détection d'inversion de sens du courant, de sens de la déformation, etc.

La figure 6 représente un exemple de schéma électrique d'un convertisseur abaisseur reprenant le principe de la figure 2.

Les interrupteurs K1 et K2 sont formés de transistors MOS tandis que l'interrupteur K3 est formé d'une diode D3 (anode côté électrode 44). Les commutations des instants t12 et t13 sont alors automatiques, respectivement quand la diode D3 devient polarisée en direct (instant t12) et quand le courant change de sens sous l'effet de l'inversion de sens de la déformation du matériau (instant t13).

Selon un autre mode de réalisation, la structure du circuit de la figure 2 est utilisée pour former un convertisseur abaisseur-élévateur. Dans ce cas, les interrupteurs K1, K2 et K3 sont tous des interrupteurs commandables (et non des diodes pour les interrupteurs K2 et K3). Le choix entre un fonctionnement en élévateur ou en abaisseur est conditionné par les phases de la déformation du matériau piézoélectrique pendant lesquelles les différents interrupteurs sont fermés. La réalisation d'un convertisseur élévateur-abaisseur se déduit des réalisations exposées pour un convertisseur abaisseur et pour un convertisseur élévateur.

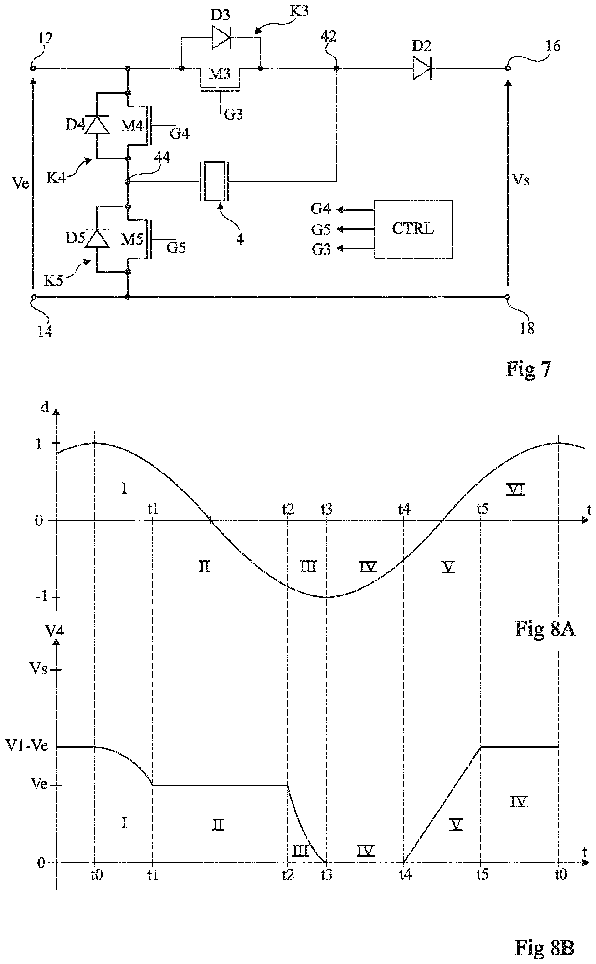

La figure 7 représente, de façon très schématique, un autre mode de réalisation d'un convertisseur dc-dc élévateur de tension. Selon ce mode de réalisation, la transmission d'énergie de l'élément 4 à la charge s'effectue sous une tension Vs-Ve.

Par rapport à la figure 4, l'électrode 44 de l'élément 4 n'est pas connectée aux bornes 12 et 18, mais est connectée au point milieu d'une association en série de deux interrupteurs K4 et K5 reliant les bornes 12 et 14. Par ailleurs, l'interrupteur K3 relie la borne 12 (borne positive de la tension Ve) à la borne 42. Ainsi, pour court-circuiter l'élément 4, il faut rendre passants simultanément les interrupteurs K4 et K3.

Les interrupteurs K4 et K5 sont, par exemple, des transistors MOS M4 et M5 chacun en parallèle avec une diode D4, respectivement D5 (pouvant être la diode intrinsèque du transistor ou un composant distinct), les anodes des diodes D4 et D5 étant respectivement côté borne 44 et côté borne 14. L'interrupteur K3 est aussi, par exemple, un transistor MOS M3 avec une diode en parallèle (anode côté borne 12). On peut utiliser des transistors MOS à canal N ou à canal P. Les transistors MOS à canal P sont préférés lorsque le potentiel de source est positif, par exemple pour les interrupteurs K3 et K4.

Les figures 8A et 8B illustrent le fonctionnement du circuit de la figure 7 en élévateur de tension.

La figure 8A illustre la déformation mécanique de l'élément piézoélectrique 4 au cours d'un cycle (une période) de résonance. L'échelle de déformation est normalisée.

La figure 8B illustre un exemple correspondant d'allure de la tension V4 aux bornes de l'élément piézoélectrique 4.

Le fonctionnement du circuit de la figure 7 et l'exposé des figures 8A et 8B se déduit du fonctionnement exposé en relation avec les figures 3A et 3B (les allures des courbes sont similaires).

Une différence est que les interrupteurs sont passants deux par deux. Ainsi, pendant la phase II (fourniture d'énergie à l'élément 4) à tension constante égale à la tension Ve, les interrupteurs K5 et K3 sont passants. Pendant la phase IV (court-circuit de l'élément 4 et tension nulle), les interrupteurs K4 et K3 sont passants. Pendant la phase VI (transfert d'énergie à la charge 2), l'interrupteur K4 et la diode D2 sont passants. Une autre différence est que la phase VI s'effectue sous une tension Vs-Ve.

Les équilibres des charges et énergétiques au cours d'une période sont respectées et on peut donc écrire (de façon générale en supposant que la tension aux bornes de l'élément 4 pendant la phase IV n'est pas nécessairement nulle mais peut être fixée à une valeur Vb) :

$$Qe + Qb + Qs = 0 ;$$

et

$$Qe*Ve + Qb*Vb + Qs*(Vs-Ve) = 0.$$

On notera que tous les circuits des modes de réalisation décrits peuvent fonctionner en abaisseur ou en élévateur de tension.

Parmi les avantages des modes de réalisation décrits, on notera que l'élément piézoélectrique n'a pas besoin d'être polarisé, et que le fait de prévoir, entre chaque commutation, un cycle dans lequel tous les interrupteurs sont ouverts, participe à la réduction de pertes de commutation, notamment par une commutation au zéro de tension.

Divers modes de réalisation et variantes ont été décrits. En particulier, le choix des niveaux de tension dépend de l'application et du gain (supérieur ou inférieur à 1) souhaité. De plus, le choix du matériau piézoélectrique dépend également de l'application de même que la forme de l'élément afin de satisfaire les contraintes en tension, en courant, et en fréquence de résonance. Une fois l'élément choisi, les intervalles de temps entre les différents cycles dépendent de la fréquence de résonance du matériau piézoélectrique.

Enfin, la mise en oeuvre pratique des modes de réalisation et variantes qui ont été décrits est à la portée de l'homme de métier à partir des indications fonctionnelles données ci-dessus. En particulier, diverses technologies d'interrupteurs peuvent être utilisées, par exemple, des transistors à effet de champ (FET), des transistors bipolaires, des transistors IGBT, des diodes, des transistors de type GAN, des relais, des micro-commutateurs, des thyristors, etc.

## Revendications

1. Convertisseur continu-continu, comportant :

    une première borne et une deuxième borne d'application d'une première tension (Ve) ;

    une première borne et une deuxième borne de fourniture d'une deuxième tension ;
    un élément piézoélectrique (4) ;
    un premier interrupteur (K1 ; D1), reliant une première électrode (42) de l'élément piézoélectrique à la première borne (12) d'application d'une première tension (Ve) ;
    un deuxième interrupteur (K2 ; D2), reliant ladite première électrode de l'élément piézoélectrique à la première borne (16) de fourniture d'une deuxième tension (Vs) ; et
    au moins un troisième interrupteur (K3 ; K4, K5) connectant la première électrode à une deuxième électrode (44) de l'élément piézoélectrique,

    le convertisseur étant configuré pour effectuer, en régime établi, un cycle de commande comportant les phases successives suivantes :

    (I) ouverture de tous les interrupteurs ;
    (II) fermeture du premier interrupteur (K1 ; D1) ;
    (III) ouverture de tous les interrupteurs ;
    (IV) fermeture du troisième interrupteur (K3 ; K4, D1) ;
    (V) ouverture de tous les interrupteurs ; et
    (VI) fermeture du deuxième interrupteur (K2).

2. Convertisseur selon la revendication 1, dans lequel la fermeture de chaque interrupteur (K1, D1 ; K2, D2 ; K3, K4, D1) s'effectue sous une tension (Ve, Vs, Vb) approximativement nulle à ses bornes.

3. Convertisseur selon la revendication 1 ou 2, dans lequel la deuxième électrode (44) de l'élément piézoélectrique (4) est connectée à la deuxième borne (14) d'application de la première tension (Ve) et à la deuxième borne (18) de fourniture de la deuxième tension (Vs).

4. Convertisseur selon la revendication 1 ou 2, dans lequel un quatrième interrupteur (K5) relie la deuxième électrode (44) de l'élément piézoélectrique (4) à la deuxième borne (14) d'application de la première tension (Ve) et à la deuxième borne (18) de fourniture de la deuxième tension (Vs).

5. Convertisseur élévateur selon l'une quelconque des revendications 1 à 4, dans lequel la phase (IV) de fermeture du troisième interrupteur (K3 ; K4) débute approximativement à un instant (t3) de déformation maximale de l'élément piézoélectrique (4).

6. Convertisseur élévateur selon l'une quelconque des revendications 1 à 5, dans lequel la phase (VI) de fermeture du deuxième interrupteur (K2 ; D2) se termine approximativement à un instant (t0) de déformation maximale de l'élément piézoélectrique (4).

**7.** Convertisseur élévateur selon l'une quelconque des revendications 1 à 6, dans lequel la régulation de la deuxième tension (Vs) s'effectue en réglant l'instant (t4) auquel se termine la phase (IV) de fermeture du troisième interrupteur (K3 ; K4).

**8.** Convertisseur élévateur selon l'une quelconque des revendications 1 à 7, dans lequel le deuxième interrupteur (K2) est une diode (D2).

**9.** Convertisseur abaisseur selon l'une quelconque des revendications 1 à 8, dans lequel la phase (IV) de fermeture du troisième interrupteur (K3 ; K4, D1) se termine approximativement à un instant (t13) de déformation maximale de l'élément piézoélectrique (4).

**10.** Convertisseur abaisseur selon l'une quelconque des revendications 1 à 9, dans lequel la phase (II) de fermeture du premier interrupteur (K1 ; D1) débute approximativement à un instant (t10) de déformation maximale de l'élément piézoélectrique (4) .

**11.** Convertisseur abaisseur selon l'une quelconque des revendications 1 à 10, dans lequel la régulation de la deuxième tension (Vs) s'effectue en réglant l'instant (t11) auquel se termine la phase (II) de fermeture du premier interrupteur (K1 ; D1).

**12.** Convertisseur abaisseur selon l'une quelconque des revendications 1 à 11, dans lequel le troisième interrupteur (K3) est une diode (D3).

**13.** Procédé de commande d'un convertisseur continu-continu, comportant au moins un élément piézoélectrique (4) comportant, en régime permanent, les phases cycliques suivantes :

connecter (II) une première électrode (42) de l'élément piézoélectrique à une première borne (12) d'application d'une première tension continue (Ve) ;
déconnecter (III) l'élément piézoélectrique en le plaçant en circuit ouvert ;
court-circuiter (IV) l'élément piézoélectrique ;
déconnecter (V) l'élément piézoélectrique en le plaçant en circuit ouvert ;
connecter (VI) ladite première borne de l'élément piézoélectrique à une première borne (16) de fourniture d'une deuxième tension continue ;
déconnecter (I) l'élément piézoélectrique en le plaçant en circuit ouvert.

**14.** Procédé selon la revendication 13, dans lequel les instants de connexion s'effectuent alors sous tension approximativement nulle d'un interrupteur de connexion correspondant.

**Patentansprüche**

**1.** Ein DC/DC-Wandler, aufweisend:
einen ersten Anschluss und einen zweiten Anschluss zum Anlegen einer ersten Spannung (Ve);

einen ersten Anschluss und einen zweiten Anschluss zum Vorsehen einer zweiten Spannung;
ein piezoelektrisches Element (4);
einen ersten Schalter (K1; D1), der eine erste Elektrode (42) des piezoelektrischen Elements mit dem ersten Anschluss (12) zum Anlegen einer ersten Spannung (Ve) koppelt;
einen zweiten Schalter (K2; D2), der die erste Elektrode des piezoelektrischen Elements mit dem ersten Anschluss (16) zum Vorsehen einer zweiten Spannung (Vs) koppelt; und
wenigstens einen dritten Schalter (K3; K4, K5), der die erste Elektrode mit einer zweiten Elektrode (44) des piezoelektrischen Elements verbindet,
wobei der Wandler so konfiguriert ist, dass er im Dauerzustand einen Steuerzyklus ausführt, der die folgenden aufeinanderfolgenden Phasen aufweist:

(I) Ausschalten aller Schalter;
(II) Einschalten des ersten Schalters (K1; D1);
(III) Ausschalten aller Schalter;
(IV) Einschalten des dritten Schalters (K3; K4, D1);
(V) Ausschalten aller Schalter; und
(VI) Einschalten des zweiten Schalters (K2).

**2.** Wandler nach Anspruch 1, wobei das Einschalten jedes Schalters (K1, D1; K2, D2; K3, K4, D1) unter einer annähernden Nullspannung (Ve, Vs, Vb) über diesen durchgeführt wird.

**3.** Wandler nach Anspruch 1 oder 2, wobei die zweite Elektrode (44) des piezoelektrischen Elements (4) mit dem zweiten Anschluss (14) zum Anlegen der ersten Spannung (Ve) und mit dem zweiten Anschluss (18) zum Vorsehen der zweiten Spannung (Vs) verbunden ist.

**4.** Wandler nach Anspruch 1 oder 2, wobei ein vierter Schalter (K5) die zweite Elektrode (44) des piezoelektrischen Elements (4) mit dem zweiten Anschluss (14) zum Anlegen der ersten Spannung (Ve) und mit dem zweiten Anschluss (18) zum Vorsehen der zweiten Spannung (Vs) koppelt.

**5.** Aufwärtswandler nach einem der Ansprüche 1 bis 4, wobei die Einschaltphase (IV) des dritten Schalters (K3; K4) ungefähr zu einem Zeitpunkt (t3) der maximalen Verformung des piezoelektrischen Elements (4) beginnt.

6. Aufwärtswandler nach einem der Ansprüche 1 bis 5, wobei die Einschaltphase (VI) des zweiten Schalters (K2; D2) etwa zu einem Zeitpunkt (t0) maximaler Verformung des piezoelektrischen Elements (4) endet.

7. Aufwärtswandler nach einem der Ansprüche 1 bis 6, wobei die Regelung der zweiten Spannung (Vs) durch Einstellen der Zeit (t4) erfolgt, zu der die Einschaltphase (IV) des dritten Schalters (K3; K4) endet.

8. Aufwärtswandler nach einem der Ansprüche 1 bis 7, wobei der zweite Schalter (K2) eine Diode (D2) ist.

9. Abwärtswandler nach einem der Ansprüche 1 bis 8, wobei die Einschaltphase (IV) des dritten Schalters (K3; K4, D1) etwa zu einem Zeitpunkt (t13) maximaler Verformung des piezoelektrischen Elements (4) endet.

10. Abwärtswandler nach einem der Ansprüche 1 bis 9, wobei die Einschaltphase (II) des ersten Schalters (K1; D1) etwa zu einem Zeitpunkt (t10) maximaler Verformung des piezoelektrischen Elements (4) beginnt.

11. Abwärtswandler nach einem der Ansprüche 1 bis 10, wobei die Regelung der zweiten Spannung (Vs) durch Einstellen des Zeitpunkts (t11) erfolgt, zu dem die Einschaltphase (II) des ersten Schalters (K1; D1) endet.

12. Abwärtswandler nach einem der Ansprüche 1 bis 11, wobei der dritte Schalter (K3) eine Diode (D3) ist.

13. Verfahren zum Steuern eines DC/DC-Schalters, der wenigstens ein piezoelektrisches Element (4) aufweist, wobei das Verfahren im Dauerzustand die folgenden zyklischen Phasen aufweist:

Verbinden (II) einer ersten Elektrode (42) des piezoelektrischen Elements mit einem ersten Anschluss (12) zum Anlegen einer ersten Gleichspannung (Ve);
Trennen (III) des piezoelektrischen Elements, indem es in einen offenen Stromkreis gebracht wird;
Kurzschließen (IV) des piezoelektrischen Elements;
Trennen (V) des piezoelektrischen Elements, indem es in einen offenen Stromkreis gebracht wird;
Verbinden (VI) des ersten Anschlusses des piezoelektrischen Elements mit einem ersten Anschluss (16) des Vorsehens einer zweiten Gleichspannung;
Trennen (I) des piezoelektrischen Elements, indem es in einen offenen Stromkreis gebracht wird.

14. Verfahren nach Anspruch 13, wobei die Verbindungszeiten dann unter einer ungefähren Nullspannung eines entsprechenden Verbindungsschalters erfolgen.

**Claims**

1. A DC/DC converter, comprising:

a first terminal and a second terminal of application of a first voltage (Ve);
a first terminal and a second terminal of supply of a second voltage;
a piezoelectric element (4);
a first switch (K1; D1) coupling a first electrode (42) of the piezoelectric element to the first terminal (12) of application of a first voltage (Ve);
a second switch (K2; D2) coupling said first electrode of the piezoelectric element to the first terminal (16) of supply of a second voltage (Vs); and
at least a third switch (K3; K4, K5) connecting the first electrode to a second electrode (44) of the piezoelectric element,
the converter being configures to perform, in steady state, a control cycle comprising the following successive phases:

(I) turning off all the switches;
(II) turning on the first switch (K1; D1);
(III) turning off all the switches;
(IV) turning on the third switch (K3; K4, D1);
(V) turning off all the switches; and
(VI) turning on the second switch (K2)..

2. The converter of claim 1, wherein the turning-on of each switch (K1, D1; K2, D2; K3, K4, D1) is performed under an approximately zero voltage (Ve, Vs, Vb) thereacross.

3. The converter of claim 1 or 2, wherein the second electrode (44) of the piezoelectric element (4) is connected to the second terminal (14) of application of the first voltage (Ve) and to the second terminal (18) of supply of the second voltage (Vs) .

4. The converter of claim 1 or 2, wherein a fourth switch (K5) couples the second electrode (44) of the piezoelectric element (4) to the second terminal (14) of application of the first voltage (Ve) and to the second terminal (18) of supply of the second voltage (Vs).

**5.** A boost converter according to any of claims 1 to 4, wherein the on phase (IV) of the third switch (K3; K4) approximately starts at a time (t3) of maximum deformation of the piezoelectric element (4).

**6.** A boost converter according to any of claims 1 to 5, wherein the on phase (VI) of the second switch (K2; D2) approximately ends at a time (t0) of maximum deformation of the piezoelectric element (4).

**7.** A boost converter according to any of claims 1 to 6, wherein the regulation of the second voltage (Vs) is performed by adjusting the time (t4) at which the on phase (IV) of the third switch (K3; K4) ends.

**8.** A boost converter according to any of claims 1 to 7, wherein the second switch (K2) is a diode (D2).

**9.** A buck converter according to any of claim 1 to 8, wherein the on phase (IV) of the third switch (K3; K4, D1) ends approximately at a time (t13) of maximum deformation of the piezoelectric element (4).

**10.** A converter according to any of claims 1 to 9, wherein the on phase (II) of the first switch (K1; D1) approximately starts at a time (t10) of maximum deformation of the piezoelectric element (4).

**11.** A converter according to any of claims 1 to 10, wherein the regulation of the second voltage (Vs) is performed by adjusting the time (t11) at which the on phase (II) of the first switch (K1; D1) ends.

**12.** A converter according to any of claims 1 to 11, wherein the third switch (K3) is a diode (D3).

**13.** A method of controlling a DC/DC switch, comprising at least one piezoelectric element (4) comprising, in steady state, the cyclic phases of:

  connecting (II) a first electrode (42) of the piezoelectric element to a first terminal (12) of application of a first DC voltage (Ve);
  disconnecting (III) the piezoelectric element by placing it in open circuit;
  shorting (IV) the piezoelectric element;
  disconnecting (V) the piezoelectric element by placing it in open circuit;
  connecting (VI) said first terminal of the piezoelectric element to a first terminal (16) of supply of a second DC voltage;
  disconnecting (I) the piezoelectric element by placing it in open circuit.

**14.** The method of claim 13, wherein the connection times then occur under an approximately zero voltage of a corresponding connection switch.

Fig 1

Fig 2

Fig 4

Fig 3A

Fig 3B

Fig 5A

Fig 5B

Fig 6

**Fig 7**

**Fig 8A**

**Fig 8B**

## RÉFÉRENCES CITÉES DANS LA DESCRIPTION

**Documents brevets cités dans la description**

- KR 20100137913
- US 6317342 B
- US 6058027 A

**Littérature non-brevet citée dans la description**

- **W. TANG et al.** Laterally Driven Polysilicon Resonant Microstructures. *Sensor and actuator,* 15 Novembre 1989
- **J. MARK NOWOROLSKI et al.** Microresonant Device for Power Conversion. *SPIE 3514, Micromachined devices and components IV,* 08 Septembre 1998